Europäisches Patentamt

European Patent Office

Office européen des brevets

(11) Publication number: **0 272 117**
**A2**

# (12) EUROPEAN PATENT APPLICATION

(21) Application number: **87311112.4**

(22) Date of filing: **17.12.87**

(51) Int. Cl.⁴: **F01P 7/16**

(30) Priority: **19.12.86 GB 8630366**

(43) Date of publication of application:
**22.06.88 Bulletin 88/25**

(84) Designated Contracting States:
**DE ES FR GB IT SE**

(71) Applicant: **Adwest Group PLC**
**The Aerodrome Headley Road East**
**Woodley Reading Berkshire RG5 4SH(GB)**

(72) Inventor: **Black, Hugh**
**38 Starmead Drive**
**Wokingham, Berkshire RG11 2HX(GB)**
Inventor: **Breeden, Anthony**
**118 Leaves Green**
**Bracknell, Berkshire RG12 3TE(GB)**
Inventor: **Ryan, David**
**38 Wilmington Close**
**Woodley, Berkshire RG5 4LR(GB)**

(74) Representative: **Singleton, Jeffrey et al**
**ERIC POTTER & CLARKSON 27 South Street**
**Reading Berkshire, RG1 4QU(GB)**

(54) Thermostatic control system.

(57) A thermostatic control system for a cooling system of an internal combustion engine, the thermostatic control system comprising a thermostatic valve (1) operable to control the flow of coolant to a radiator forming part of the cooling system, a fluid motor 925) connected to the thermostatic valve and operable to override the normal operation thereof, a supply of fluid (26) for operating the fluid motor and control means (27) operable to control the supply of fluid to the fluid motor, via check valve means (31), the control means serving to exhaust the fluid motor whenever the supply of fluid thereto is interrupted.

Fig. 1

# THERMOSTATIC CONTROL SYSTEM

This invention relates to thermostatic control systems and more particularly to such systems for the cooling systems of internal combustion engines.

In one known cooling system for an internal combustion engine, such as that for an automobile, involves water cooling, the water being heated by the engine, passed to a radiator through a thermostatic valve for cooling and then returned to the engine to cool the latter to within a predetermined nominal operating temperature. In an alternative system the water first passes through the radiator before flowing through the thermostatic valve. The predetermined nominal operating temperature is governed by the thermostatic valve which is based on the opening temperature thereof which is of the order of 80°C to 92°C for a modern automobile, depending on the specific requirement and the location of the thermostatic valve. It will be understood that the nominal working temperature of the actual coolant may be a few degrees higher due to thermal inertion but this is taken into account when selecting a thermostatic valve for a given system. When an engine is cold, the thermostatic valve remains closed and the water circulates only through the engine block via a by-pass until such time as it reaches the temperature at which the thermostatic valve opens, whereupon it is then passed to the radiator for cooling. The hotter the water becomes, the further the thermostatic valve opens.

Such a thermostatic control system operates satisfactorily for engines requiring a nominal operating temperature of the order of 80°C because the critical temperature is normally of the order of 120°C so that a considerable tolerance is available and even under the most severe operating conditions the system can effect cooling without the critical temperature of 120°C being reached. However, there is a growing requirement for internal combustion engines to be operated at nominal temperatures higher than those currently employed in order to optimise the efficiency of the engine but this gives rise to a problem of providing a satisfactory thermostatic control system.

For example, a nominal operating temperature of 110°C is optimum for certain internal combustion engines but it will be appreciated that this allows very little tolerance vis a vis the critical temperature of 120°C compared with operating temperature of 80°C. Accordingly, a very fast acting thermostatic control system is required and to date, such has not been available.

The obvious expedient to accommodate a nominal operating temperature of 110°C would be to increase the physical size of the radiator in the cooling system but in most cases this would not be acceptable as space is at a premium, even ignoring the increased cost which also would not be acceptable. Attempts have been made to control a given size of cooling system in a more efficient manner but without success from the standpoint of providing a reliable system that will effect control based on the nominal operating temperature of 110°C and never allow the critical temperature of 120°C to be reached even in the most severest of environments, assuming that the system is working normally and is not subject to a blockage for example. One such attempt is disclosed in GB-A-2086536 in which control system of a vacuum motor is employed connected via a linkage to the pin or piston of a conventional thermostatic valve based on the expansion of a substance such as wax. As the wax expands, the pin or piston is projected further and further from the thermostatic valve housing and if it contacts a fixed abutment, there is a reaction in the opposite direction which serves to open the thermostatic valve and also close the normal by-pass by way of a secondary valve member forming part of the overall thermostatic valve. This prior arrangement worked on the principle that if the engine is under load, then the vacuum applied to the motor will decrease and the linkage is arranged to open the thermostatic valve further and close the by-pass valve still further. Accordingly, the arrangement was intended to anticipate an increase in temperature by sensing the load on the engine and thus preventing any undue rise in coolant as opposed to dealing with an actual increase in temperature. However, this arrangement has been found to be relatively slow acting in relatively stable operating conditions or alternatively unstable, due to hunting, under normal driving conditions and, therefore, not suitable for a thermostatic control system the nominal operating temperature of which is relatively close to the critical temperature as discussed above.

Somewhat similar arrangements are also disclosed in EP-A-0098979 and GB-A-2170884 and which suffer from the same or other disadvantages.

According to the present invention there is provided a thermostatic control system for a cooling system of an internal combustion engine, the thermostatic control system comprising a thermostatic valve operable to control the flow of coolant to a radiator forming part of the cooling system, a fluid motor connected to the thermostatic valve and operable to override the normal operation thereof, a supply of fluid for operating the fluid motor and control means operable to control the supply of fluid to the fluid motor, via check valve means, the control means serving to exhaust the fluid motor whenever the supply fluid thereto is interrupted.

The fluid motor may be a vacuum motor and the source of fluid supply therefor may be the engine inlet manifold. Alternatively, the fluid motor may be an hydraulic motor which is supplied from a conventional source of hydraulic fluid. In the context of a vacuum motor, the exhausting thereof whenever the supply fluid thereto is interrupted conveniently by way, of connecting the vacuum motor to atmosphere. In the context of an hydraulic motor, the exhausting thereof whenever the supply fluid thereto is interrupted is conveniently by way of connecting the fluid motor to tank or reservoir forming part of a normal hydraulic system. A reservoir or accumulator may be provided between the supply of fluid and the fluid motor in order to damp variations in supply pressure.

It has been found that by using the simple expedient of exhausting the fluid motor whenever the fluid supply thereto is interrupted is highly effective in producing the desired fast-acting thermostatic control system because the thermostatic valve can be operated quickly to the open position without any interference from the fluid motor.

The thermostatic valve may be operated directly from the fluid motor by way of some form of mechanical linkage if space permits the fluid motor to be mounted closely adjacent the thermostatic valve. However, when direct mounting is not possible, the thermostatic valve may be operated remotely such as by a Bowden cable for example.

The control means may be in the form of a solenoid valve, which may be of the proportional type, the valve being controlled by an electrical signal which may be generated in an electronic engine management system, for example, for the automobile or other vehicle to which the thermostatic control system is fitted. Alternatively, the control means may be in the form of a modulator.

Thermostatic control systems in accordance with the present invention will now be described in greater detail, by way of example with reference to the accompanying drawings in which:-

Figure 1 is basically a block diagram of a thermostatic control system in accordance with the invention,

Figure 2 is an enlarged section of a component only partially shown in Figure 1,

Figures 3 and 4 shown an alternative embodiment in two operating conditions, respectively,

Figure 5 is a block diagram of a still further embodiment,

Figure 6 is a view generally similar to that of Figure 2 but showing another alternative embodiment,

Figures 7, 8 and 9 are sections on the lines VII, VIII and IX, respectively, of Figure 6,

Figure 10 is a view generally similar to that of Figure 2 but showing another alternative embodiment,

Figure 11 is a plan view of Figure 10.

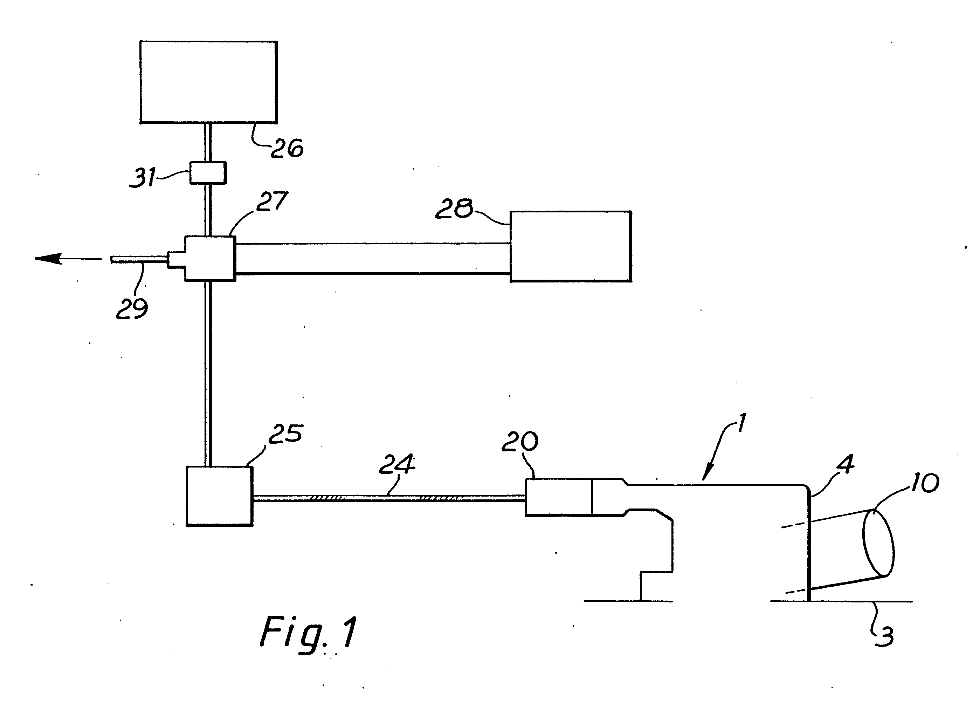

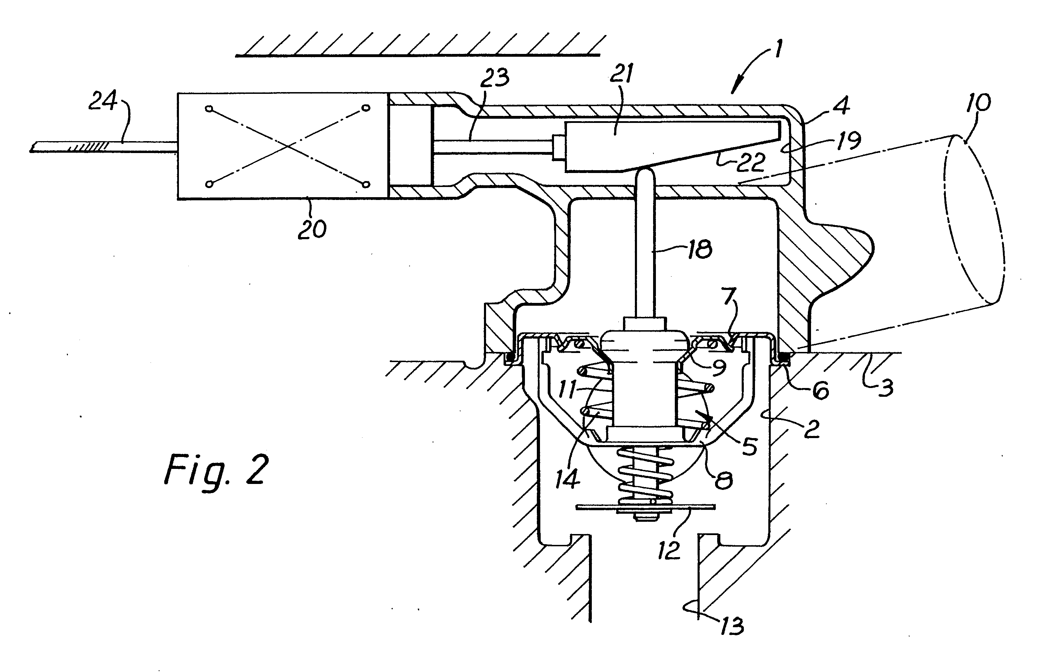

Referring first to Figure 1 and 2, the overall thermostatic control system comprises a thermostatic valve 1 mounted in a thermostat housing comprising a chamber 2 provided in a casting 3 provided of either the water inlet or water outlet for the internal combustion engine to which the system is fitted, and a cap 4 which co-operates with the chamber 2 to provide the overall housing. In the illustrated embodiment of Figures 1 and 2, the casting 3 is associated with the water outlet of the engine. The thermostatic valve 1 is of the conventional wax type and comprises a body 5 having a flange 6, by means of which the valve is secured in the chamber 2, a valve seat 7 and a supporting frame 8. A valve member 9 having a hollow cup 11 is mounted centrally within the body 5 for axial movement between a closed position, illustrated in Figure 2, in which it lies in sealing engagement with the valve seat 7, and an open position in which the valve member is displaced downwardly as seen in Figure 2 thus allowing water to pass through the valve assembly to an outlet 10 which is connected to a radiator (not shown) forming part of the conventional water cooling system of the internal combustion engine for an automobile or other vehicle. The valve member 9 carries a secondary valve member 12 which seals a by-pass passage 13 in the casting 3 when the valve member 9 is in its fully open position. The by-pass passage 13 allows coolant to circulate in the engine cooling passages when the valve 1 is closed. A compression spring 14 acting between the valve member 9 and the supporting frame 8 of the body 5 biases the valve member 9 into its closed position.

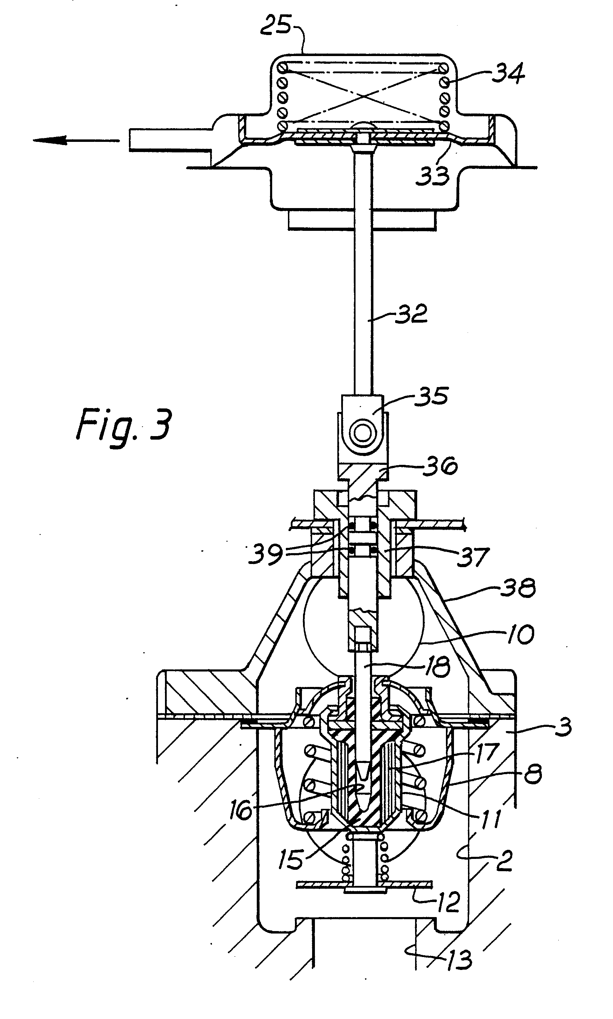

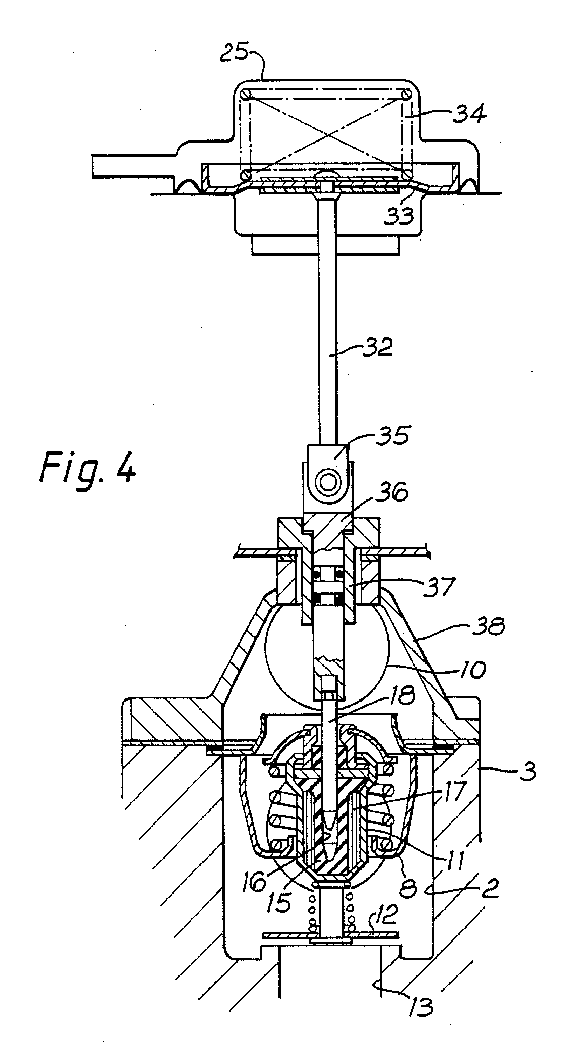

Referring now to Figures 3 and 4 which shows in section a valve 1 generally similar to that of Figure 2, a flexible sleeve 15 defining a central axial recess 16 is mounted within the hollow cup 11 of the valve member 9 and the space between the sleeve 15 and the internal wall of the hollow stem is filled with a body 17 of a microcrystalline paraffin wax having a formulation which will produce the required nominal operating temperature. The recess 16 houses a reaction pin or piston 18 which is tapered at one end to conform to the internal shape of the recess 16. Alternatively, the said one end may merely be rounded. The other end of the pin 18 extends from the valve body 5 and through the main portion of the cap 4 into a secondary chamber 19 thereof which slidably receives a slide 21 having a tapered or cam face 22 for a purpose to be described. The slide 21 is connected to a sprung-loaded cylinder 20 via a rod 23, the spring loaded cylinder being connected via a Bowden cable 24 to the output of a vacuum motor 25.

The vacuum motor is 25 connected to a vacuum supply 26 which is conveniently the inlet manifold of the internal combustion engine to which the thermostatic control system is applied. The vacuum supply 26 is connected to the vacuum motor 25 via a solenoid valve 27 which receives an electrical control signal from an electronic engine management system 28 for the automobile. The solenoid valve 27 is arranged such that when it operates to interrupt the vacuum supply 26 to the vacuum motor 25, the latter is connected to exhaust via a connection 29, exhaust in this context being atmosphere. When this connection is made, a check valve 31 prevents the vacuum supply 26 also being connected to exhaust or atmosphere. When the solenoid valve 27 is operated so as to connect the vacuum supply 26 to the vacuum motor 25, the exhaust connection 29 is closed.

Returning to the thermostatic valve 1, the normal operation thereof is that when the wax 17 is heated sufficiently by the water in contact with the valve cup 11, the wax expands and compresses the flexible sleeve 15, whereby the tapered end of the pin or piston 18 is squeezed such that the latter is forced out of the sleeve. If the pin 18 is free to move out of the sleeve 15 then the valve member 9 will remain in contact with the valve seat 7 but if the pin engages a fixed abutment, then the latter provides a reaction with the result that the valve member 9 moves downwardly relative to the pin 18 and against the action of the spring 14 and thus moves the valve member 9 off the valve seat 7 so as to allow water to flow from the engine, through the thermostatic valve to the outlet 10 connected to the radiator inlet.

The extent of free movement of the valve pin or piston 18 before it contacts the abutment provided by the slide 21 is governed by the position of the latter within the auxillary chamber 19 of the cap 4. As shown in Figure 2, the slide 21 is in the position which gives rise to the minimum distance between itself and the valve 1 and thus allows the pin or piston 18 the minimum amount of lost motion before it contacts the abutment and thus sets up the reaction to commence opening of the thermostatic valve 1. The further the slide 21 is moved to the left as seen in Figure 2, the greater the distance between the piston and the thermostatic valve 1 becomes and hence the greater the lost motion of the pin or piston 18 before contact is made with the fixed abutment provided by the piston. The position of the slide 21 is governed by the cylinder 20 which in turn is governed by the vacuum motor 25 which is controlled by the engine management system. During normal operation of the thermostatic valve 1, it will be appreciated that the solenoid valve 27 is in the position in which the vacuum motor 25 is connected to the inlet manifold of the engine. However, should there be sensed a relative rapid increase in the temperature of the coolant by the engine management system 28, then the solenoid valve 27 is actuated immediately such that the vacuum supplied to the vacuum motor 25 is interrupted and the latter connected to exhaust as already described. Thus, the slide 21 is now able to return immediately to the position shown in Figure 2 under the action of the spring loaded cylinder 20. This movement of the slide 21 forces the pin or piston 18 of the thermostatic valve 1 downwardly as seen in Figure 2 as it rides down the cam surface 22. In as much as the wax 17 in the valve cup 11 is expanded due to its temperature, it cannot be contracted and therefore the wax, sleeve 15 and piston or pin 18 are "solid" in this respect and thus any movement downwardly of the pin or piston 18 results in downward movement of the valve member 9 and thus opens further, possibly to the fully open position, the thermostatic valve and closes further, possibly fully closes, the secondary valve 12 so as to further close or fully close the by-pass 13. In this way, there is maximum flow of water to the radiator for cooling and hence rapid cooling of the engine so that the latter is prevented from reaching the critical temperature of the order of 120°C. This very rapid reaction to an increase in temperature results in the nominal operating temperature being maintained within relatively close limits (for example plus or minus 2°C) which means that the nominal operating temperature can be elevated compared to that at present known, for example it can be of the order of 110°C and thus allow the engine to operate far more efficiently than at a lower temperature.

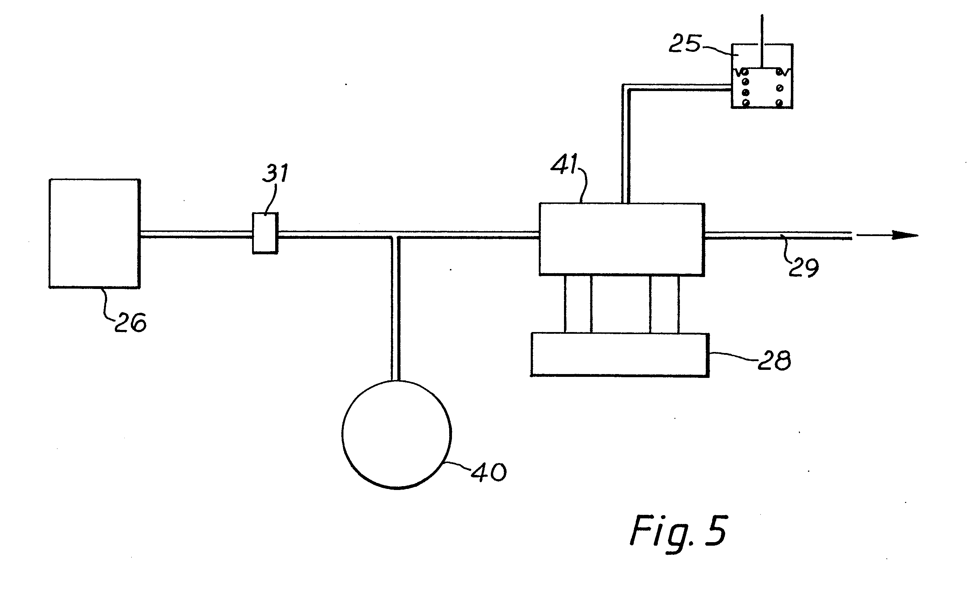

Turning now to Figures 3 and 4 these show an alternative embodiment in which the thermostatic valve 1 is operated directly from the vacuum motor 25 via a rod 32 which is connected at one end to a diaphragm 33 of the motor which diaphragm is urged downwardly as seen in Figure 5 by a spring 34. The other end of the rod 32 is connected via a universal joint 35 to a piston 36 acting in a cylinder 37 attached to a housing 38 for the thermostatic valve 1 which is similar to that of Figure 2 and has like references numerals allocated thereto. The pin or piston 18 of the valve 1 is carried by the piston 36 which is sealed relative to the cylinder 37 by O-rings 39.

Figure 3 illustrates the position of the thermostatic valve 1 when for example, there is a low load on the engine which creates a vacuum supply which is connected to the motor 25 on the command of the engine management system 28 and thus increases the lost motion movement of the pin or piston 18 of the thermostatic valve 1, whereby the valve is maintained in the closed position until the operating temperature, such as 110°C, is reached. Figure 4 of the drawings illustrates the situation when the engine management system 28 has commanded operation of the solenoid valve 27 so as to interrupt the vacuum supply to the motor 25. In the latter respect, the vacuum supply interruption, coupled with the connection of the motor 25 to exhaust through the valve 27, means that the spring 34 in the vacuum motor forces the output rod 32 downwardly as seen in Figure 4 of the drawings, and thus moves with it the pin or piston 18 of the thermostatic valve 1. As with the first embodiment, this movement of the pin or piston 18 results in overall downward movement of the valve member 9 because the pin is "solid" with the sleeve 15 and wax 17 of the thermostatic valve 1. Thus, the thermostatic valve is opened, possibly to the fully open position, and the secondary valve 12 is further closed, possibly fully closed, so that there is an increased, possibly maximum, flow of water to the radiator for cooling and return to the engine for cooling of the latter.

Turning now to Figure 5 of the drawings, this illustrates a modified control system providing a still further alternative embodiment. In this arrangement, a reservoir or accumulator 40 is provided between the check valve 31 and a modulator 41 which receives electrical inputs from the engine management system 28. The modulator 41 replaces the solenoid valve 27 of the embodiment of Figure 1 and serves to connect the vacuum source 26 to the vacuum motor 25 or to interrupt that connection and at the same time connect the vacuum motor 25 to exhaust. When the vacuum source 26 is connected to the vacuum motor 25, the modulator 41 can be controlled from the engine management system 28 so as to apply the full or partial vacuum from the supply, as required. Any excess vacuum will be bled to exhaust.

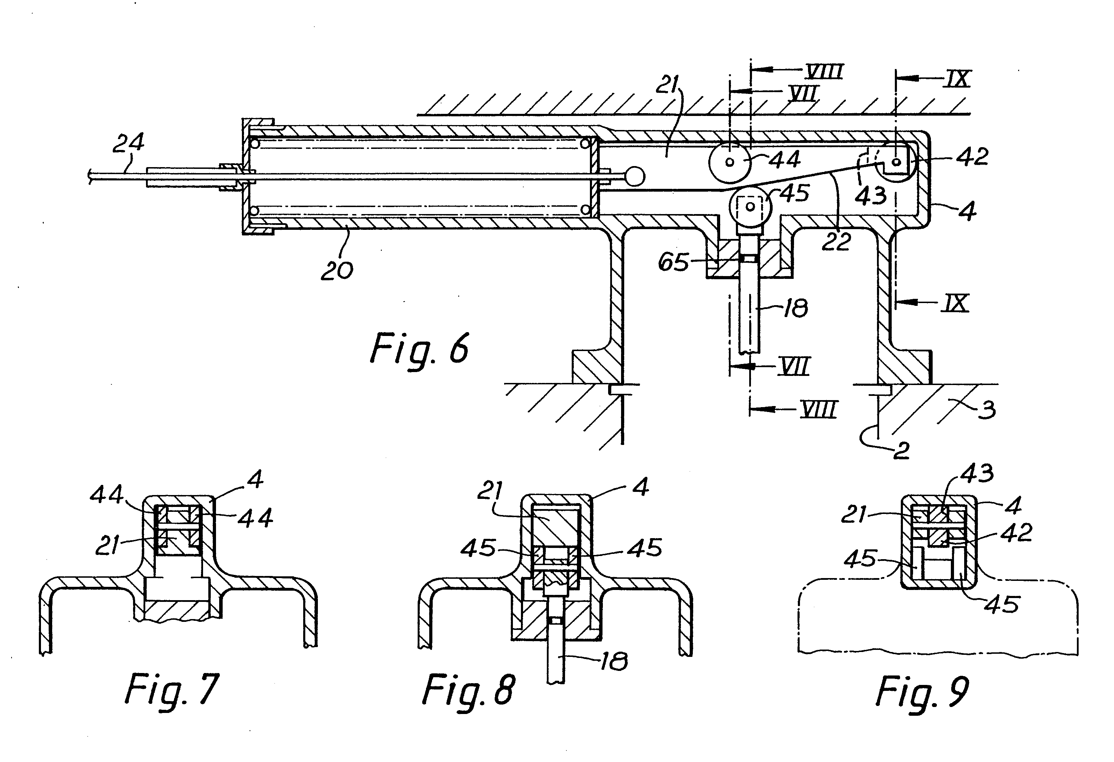

Referring now to Figures 6 to 9, these show an alternative embodiment which is basically similar to that of Figures 1 and 2, the difference being that the slide 21 is fitted with rollers in order to reduce the frictional forces acting on the slide. More specifically, the slide 21 is fitted with a roller 42 at the end opposite to that to which the rod 23 is connected, the roller being accommodated in a central slot 43 provided in the end of the slide. A pair of rollers 44 is provided generally centrally of the slide 21 and these rollers are accommodated in respective recesses formed in the sides of the slide. It will be seen from Figure 6 that the roller 42 is mounted such that it is proud of the upper surface of the slide 21 and also the front end of the slide, and that the rollers 44 are mounted so as to be proud of the upper surface of the slide. It is found that the provision of a pair of rollers 44 helps to stabilise the slide 21 against any rocking movement. The rollers 42 and 44 may run in slots provided in the top of the cap 4.

The pin or piston 18 of the thermostatic valve 1 is also fitted with a pair of rollers 45 at its upper end, which roller is engageable with the cam surface 22 of the slide 21 so as again to reduce the frictional forces between these two components.

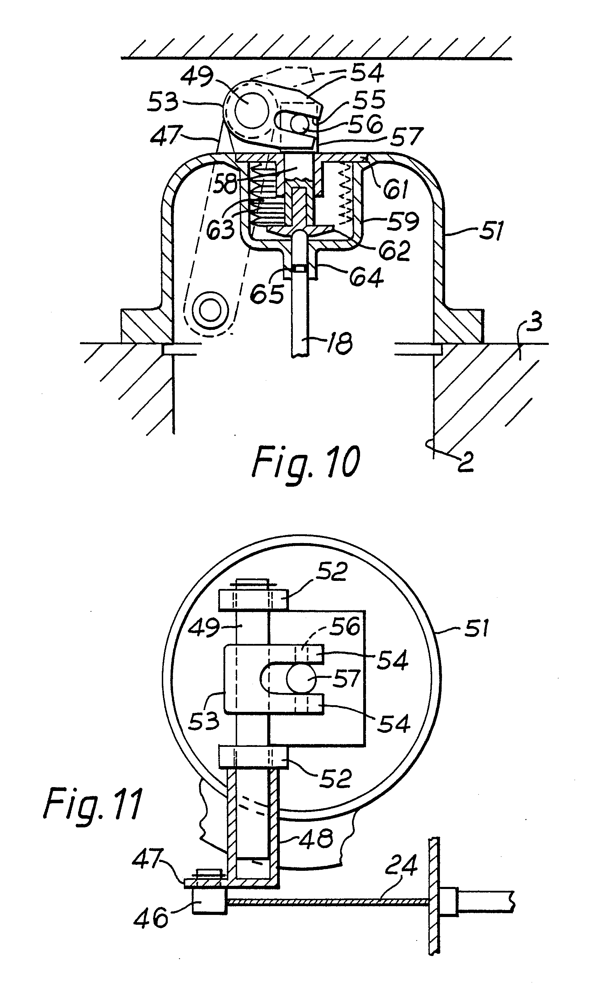

Turning now to Figures 10 and 11, these show a still further embodiment in which the thermostatic valve 1 is controlled via a mechanical linkage system. As with the embodiments of Figures 1 and 2, and Figures 6 to 9, the vacuum or other fluid motor is attached to the linkage system via a Bowden cable 24. More particularly, the Bowden cable 24 is attached to a boss 46 which is provided at one end of a lever 47, the other end of which carries a bush 48 which receives one end of a pivot shaft 49. The bush 48 and pivot shaft 49 are connected together, for example by a pin, in order that rotation of the bush results in rotation of the shaft. The components 46 to 49 are mounted externally of a cap 51 which cooperates with the chamber 2 in a similar manner to the cap 4 of the embodiment of Figures 1 and 2. The pivot shaft 49 extends across the top of the cap 51 and to one side thereof, with the components 46, 47, 48 being located to that one side of the cap.

The pivot shaft 49 is journalled in two spaced bushes 52 supported on top of the cap 51 and between the two bushes there is rigidly connected to the shaft a bifurcated member 53, each limb 54 of which is slotted as indicated at 55. A pin 56 is slidably received within the slots 55 of the limbs 54 of the member 53, the pin being carried at one end of a cylindrical rod 57 which has a portion 58 of reduced diameter which is received within a recess 59 in the top of the cap 51. The recess 59 is closed by a plate 61 which is apertured slidably to receive the reduced diameter portion 58 of the rod 57. The step between the two portions of the rod 57 of different diameters acts as a limit stop for the rod 57. The reduced diameter portion 58 of the rod 57 is formed with a blind bore which receives, as a press fit, the stem of a mushroom-headed member 62 the external face of the head of which is formed with a part spherical recess which receives, and acts as a seat for, the rounded end of the pin or piston 18 of the thermostatic valve 1. The member 62 and rod 57 are biased downwardly as seen in Figure 9, by a series of bellville washers 63 which act between the underside of the head of the member 62 and the closure plate 61 for the recess 59. The upper end of the pin or piston 18 of the thermostatic valve 1 is slidably received within a collar 64 forming part of the recess 59, the pin being grooved to received an O ring 65 to provide a seal between the interior and exterior of the cap 51.

The normal operation of the control system is similar to that already described in respect of the other embodiments and when the bowden cable 24 is pulled to the right as seen in Figures 9 and 10 by the vacuum or other motor, the lever 47 is rotated anticlockwise, thus rotating the bush 48 and pivot shaft 49 in the same direction. This rotation results in an anticlockwise rotation of the bifurcated member 53 which in turn results in a vertical movement of the rod 57 and mushroom-headed member 62. Thus, the head of the member 62 is lifted vertically, so as to adjust the fixed abutment for the pin or piston 18 of the thermostatic valve 1. In the embodiment illustrated, the rounded end of the pin or piston 18 merely sits in the corresponding recess in the head of the member 62 when the two components cooperate but it would be possible to attach the pin 18 to the head of the member 62 and thus provide the effective lost motion for the pin 18 at the lower end thereof relative to the wax 15 of the thermostatic valve 1. If the engine management system 28 commands the exhausting of the vacuum motor 25, the Bowden cable 24 is released and the bellville washers 63 effect an immediate downward movement of the rod 57 and mushroom headed member 62 and hence a downward movement of the piston or pin 18 to open the thermostatic valve.

It will be appreciated that in all of the illustrated embodiments the control system is fail-safe in the sense that if the vacuum motor or other controlling means fails, then the abutment for the end of the pin or piston 18 of the thermostatic valve is immediately returned to the nominal position which means that the thermostatic valve 1 will open as soon as the nominal operating temperature is exceeded. Thus, maximum cooling of the coolant will always be effected upon failure of the vacuum motor or other motor employed so as to prevent overheating even though this will not achieve the desired optimum operating temperature of the engine to which the thermostatic control system is fitted.

It will also be appreciated that when a vacuum motor is used, the vacuum supply may be provided by a vacuum pump, for example, and need not be provided from the inlet manifold of the engine.

A proportional solenoid valve may be employed in the embodiments of Figures 1 to 4, 6 to 9, and 10, 11 in order to allow the management control system 28 to control the vacuum supply to the vacuum motor 25, as does the modulator 41, any excess vacuum being bled to the exhaust.

It will be seen that by the simple expedient of connecting the fluid motor 25 to exhaust whenever the fluid supply is interrupted by the control means 27, 41 the fluid motor is immediately neutralised so that the valve pin or piston 18 is able to move very rapidly to open the valve 1. Thus, there is always very rapid opening of the thermostatic valve 1 when the management control system 28 gives the appropriate signal to the control means 27 or 41 which means that the nominal operating temperature can be controlled within very tight tolerances. Accordingly, a thermostatic control system in accordance with the invention can be used to provide reliable control for an internal combustion engine which operates much closer to the critical operating temperature, for example at 110°C against a critical temperature of 120°C, and thus provides a practical control system without the shortcomings of systems known to date.

## Claims

1. A thermostatic control system for a cooling system of an internal combustion engine, characterised in that the thermostatic control system comprises a thermostatic valve (1) operable to control the flow of coolant to a radiator forming part of the cooling system, a fluid motor (25) connected to the thermostatic valve and operable to override the normal operation thereof, a supply of fluid (26) for operating the fluid motor, and control means (27) operable to control the supply of fluid to the fluid motor, via check valve means (31), the control means serving to exhaust the fluid motor whenever the supply fluid thereto is interrupted.

2. A system according to claim 1, characterised in that the fluid motor is a vacuum motor (25).

3. A system according to claim 2, characterised in that the supply of fluid for the vacuum motor (25) is in use provided from the inlet manifold of the engine to which the system is fitted.

4. A system according to claim 1, characterised in that the fluid motor is an hydraulic motor.

5. A system according to any of the preceding claims, characterised in that an accumulator (40) is provided between the supply of fluid (26) and the fluid motor (25) to damp variations in supply pressure.

6. A system according to any of the preceding claims, characterised in that the control means is in the form of a solenoid valve (27).

7. A system according to claim 6, characterised in that the solenoid valve (27) is of the proportional type.

8. A system according to any of claims 1 to 5, characterised in that the control means (27) is in the form of a modulator.

9. A system according to any of the preceding claims, characterised in that the control means (27) is controlled by an engine management system (28) for the engine to which the thermostatic control system is fitted.

10. A system according to any of the preceding claims, wherein the fluid motor (25) is connected to the thermostatic valve (1) via a mechanical linkage (32-39).

11. A system according to claim 10, characterised in that the linkage comprises a rod (32) connected at one end to the output of the fluid motor (25) and at the other end to a piston (36) to which is also connected the pin (18) of the thermostatic valve (1).

12. A system according to claim 11, characterised in that the rod (32) is connected to the piston (36) via a universal joint.

13. A system according to claim 10, characterised in that the linkage includes a cable (24) extending from the output of the motor (25) to a spring-loaded slide (21) which provides an adjustable abutment for the pin (18) of the thermostatic valve.

14. A system according to claim 13, characterised in that the spring-loaded slide (12) has an inclined cam face (22) engageable by the pin (18) of the thermostatic valve (1), the point of engagement determining the opening of the thermostatic valve.

15. A system according to claim 13 or 14, characterised in that the slide (21) is provided with means for reducing the frictional forces in use acting thereon.

16. A system according to claim 15, wherein the friction reducing means comprise one or more rollers (44) mounted on the slide (21).

17. A system according to claim 10, characterised in that the mechanised linkage comprises a rotatable lever (47) connected at one end to the output of the fluid motor (25) and carrying a pivot shaft (49) at the other end, the pivot shaft carrying a slotted member (53) which receives a pin (56) in the slot, the pin being attached to a rod (57) which provides an adjustable abutment for the pin (18) of the thermostatic valve, the adjustment of the abutment being effected by axial movement of the rod (37) on rotation of the lever (47) and hence pivot shaft.

0 272 117

*Fig.1*

Fig. 2

Fig. 3

Fig. 4

25

34

33

32

35

36

37

38

10

18

3

17

11

16

8

2

15

12

13

*Fig. 5*

0 272 117

Fig. 6

Fig. 7

Fig. 8

Fig. 9

Fig. 10

Fig. 11